# EUROPÄISCHE PATENTSCHRIFT

(11) **EP 1 396 417 B1**
(45) Veröffentlichungstag und Bekanntmachung des Hinweises auf die Patenterteilung: **01.03.2006**
(21) Anmeldenummer: 03019555.6
(22) Anmeldetag: 02.09.2003
(51) Int. Cl.: B62D 53/10

(54) **Vorrichtung zur Anzeige des Verschlusszustandes einer Sattelkupplung und Sattelkupplung**
Device for indicating the closure state of a fifth wheel coupling and fifth wheel coupling
Dispositif pour indiquer la position de fermeture d'une sellette d'attelage et sellette d'attelage

(30) Priorität: 06.09.2002 DE 10241904
(43) Veröffentlichungstag der Anmeldung: 10.03.2004
(73) Patentinhaber: Jost-Werke GmbH & Co. KG, 60528 Frankfurt am Main (DE)
(72) Erfinder: Algüera, José, 63739 Aschaffenburg (DE); Eiermann, Michael, 64319 Pfungstadt (DE); Krüger, Achim, 64579 Gernsheim (DE)
(74) Vertreter: Fuchs Mehler Weiss & Fritzsche

(56) Entgegenhaltungen:
- EP-A- 0 794 110
- EP-A- 1 147 973
- DE-A- 19 820 139

## Beschreibung

Die Erfindung betrifft eine Sattelkupplung, sowie eine Vorrichtung zur Anzeige des Verschlusszustandes der Sattelkupplung umfassend eine Auswerteeinheit, an welche ein erster und ein zweiter Sensor angeschlossen sind, sowie eine mit der Auswerteeinheit verbundene Anzeigeeinheit.

Einen gattungsbildenden Stand der Technik stellt in diesem Zusammenhang die DE 198 20 139 A 1 dar, in der ein Verfahren und eine Anordnung zur Überwachung des ordnungsgemäßen Verriegelns und Sichems einer mit einem Verschlussmechanismus und einem Sicherungsmechanismus versehenen Sattelkupplung beschrieben ist. Dabei sind ein erster Sensor zur Überwachung des Zustandes des Verschlussmechanismus und ein zweiter Sensor zur direkten oder indirekten Überwachung des Zustandes des Sicherungsmechanismus vorgesehen. Der erste Sensor soll als induktiver Näherungsschalter auf der Unterseite des Verschlussriegels angeordnet sein und die Position des Königszapfens in Relation zu dem Verschlussriegel überwachen. Bei einem zu hoch eingefahrenen Königszapfen steht dieser auf dem Verschlussriegel auf, wodurch das Risiko von Fehlerkennungen erhöht ist. In der Praxis hat sich eine derartige Positionierung des ersten Sensors jedoch als nachteilig erwiesen, da zuerst der Verschlussriegel geschlossen werden muss und erst im Anschluss ein Sensieren der Position des Königszapfens in Relation zu dem Verschlussriegel durchgeführt werden kann. Dieses hatte bei falsch positionierten Königszapfen einen erhöhten Verschleiß und Beschädigungen des Verschlussriegels und des daran angeordneten ersten Sensors zur Folge, da der Verschlussriegel auch im Fahrbetrieb einer erheblichen Stoßbelastung unterliegt, die sich auch auf den ersten Sensor überträgt. Eine weitere Schwachstelle stellen die beweglich verlegten Kabel dar. Als zweiter Sensor dient ebenfalls ein induktiver Näherungsschalter, der einen den Sicherungsmechanismus gegen Lösen sichernden Verschlussmechanismus überwacht. Hierzu wird eine Zunge des Verschlussmechanismus überwacht, die sich nur dann im Erfassungsbereich des Sensors befindet, wenn der Verschlussmechanismus in einer Schließstellung verharrt, in welcher der Bedienhebel durch einen Nocken gesichert ist. Der wesentliche Nachteil der Sensoranordnung des zweiten Sensors ist darin zu sehen, dass es immer wieder zu fehlerhaften Signalmeldungen kommt, da der überwiegende Teil der Sattelkupplung aus Stahl gefertigt ist und durch ein Betätigen des Bedienhebels eine Vielzahl anderer Bauteile ihre Position zum zweiten Sensor verändern und dadurch ein Fehlsignal auslösen.

Die Nachteile des Standes der Technik sind auch bei einem in der EP 0 794 110 A1 beschriebenen Kupplungs-Kontrollsystem vorhanden. Das bekannte Kupplungs-Kontrollsystem umfasst einen Auflieger-Abstandsmelder zum Sensieren eines in kurzer Entfernung befindlichen Aufliegers, einen Königszapfen-Sensor zum Sensieren eines in der Einfahröffnung der Sattelkupplung befindlichen Königszapfens, einen Verschluss-Sensor zum Sensieren einer in eine Öffnungs- und eine Verschlussstellung bringbaren Verschlussmechanik sowie eine in dem Fahrzeug angeordnete Anzeigevorrichtung, welche dem Fahrer die Daten der drei vorstehend genannten Sensoren darstellt. Der Königszapfen-Sensor ist in einem seitlichen Bereich neben dem verriegelten Königszapfen angeordnet.

Aufgrund der betreffenden Nachteile des Standes der Technik lag der Erfindung die Aufgabe zugrunde, eine Vorrichtung zur Anzeige des Verschlusszustandes bereitzustelten, die sowohl eine Maximierung der betrieblichen Verfügbarkeit als auch eine Minimierung von Fehlsignalen ermöglicht

Die Aufgabe wird mit einer Vorrichtung zur Anzeige des Verschlusszustandes einer Sattelkupplung gelöst, umfassend eine Aufnahmeöffnung zur Aufnahme eines Königszapfens, einen Bedienhebel, der in einer Schließstellung in einer Halteposition fixierbar ist, und eine Auswerteeinheit, an welche ein erster und ein zweiter Sensor angeschlossen sind, sowie eine mit der Auswerteeinheit verbundene Anzeigeeinheit. Erfindungsgemäß ist der erste Sensor im Bereich der Aufnahmeöffnung anbringbar und detektiert den Königszapfen, während der zweite Sensor einen magnetempfindlichen Sensor umfasst, der mit einem an dem Bedienhebel anbringbaren Magneten zusammenwirkt, wobei beide Sensoren auf unterschiedlichen Messprinzipien beruhen.

Wenn beide Sensoren auf unterschiedlichen Messprinzipien beruhen, z. B. Näherungsschalter und magnetempfindlicher Sensor, werden nicht nur die möglicherweise gegenseitigen Beeinflussungen sondern auch die Ausfallrisiken minimiert.

Hinsichtlich der auf der Anzeigeeinheit darstellbaren Kupplungszustände kommen im Regelbetrieb zunächst zwei Zustände vor. In einem ersten Zustand wird durch den ersten Sensor ein Königszapfen detektiert und durch den zweiten Sensor eine Verschlussstellung des Bedienhebels bestätigt.

In einem zweiten Zustand erkennt der erste Sensor keinen Königszapfen und der zweite Sensor meldet eine Öffnungsstellung des Bedienhebels, d. h. die Zugmaschine fährt derzeit ohne Auflieger mit einfahrbereiter Sattelkupplung.

Im Falle einer Öffnungsstellung des Bedienhebels bei Anwesenheit eines Königszapfens bzw. Schließstellung des Bedienhebels ohne Anwesenheit eines Königszapfens wird dem Fahrer durch die Anzeigeeinheit eine Fehlermeldung signalisiert.

Durch die Positionierung des ersten Sensors in der Aufnahmeöffnung der Sattelkupplung, vorteilhafterweise in einem dem Verschlussriegel gegenüberliegenden Bereich, befindet sich der erste Sensor in einem nur geringen Verschleiß unterliegenden Bereich. Während des Einfahrvorganges fährt die Zugmaschine rückwärts vor den stehenden Auflieger, der zum Verbinden mit der Sattelkupplung der Zugmaschine einen Königszapfen mit einem oberen Bund, einem durchmesserreduzierten Mittelabschnitt zum Angreifen des Verschlussriegels der Sattelkupplung und einem unteren Bund ausgebildet ist. Der erste Sensor kann nunmehr beispielsweise den unteren Bund des in der Aufnahmeöffnung bereits befindlichen Königszapfens sensieren, ohne dass der Verschlussriegel geschlossen ist. Bei ,einer Fehlstellung des Königszapfens ist es dem Fahrer in der Öffnungsstellung der Sattelkupplung möglich, zunächst Korrekturen vorzunehmen, bis eine sowohl horizontal als auch vertikal korrekte Position des Königszapfen durch den ersten Sensor detektiert wird.

Bei dem zweiten Sensor soll ein magnetempfindlicher Sensor zum Einsatz kommen. Hierfür kommen beispielsweise Reed-Sensoren oder Halt-Sensoren in Frage, die mit einem an entsprechender Stelle des Bedienhebels befindlichen Magneten zusammenwirken. Dabei bewegt sich vorzugsweise der Magnet in Richtung des ortsfest angebrachten zweiten Sensors. Da üblicherweise keine weiteren Magneten an der Sattelkupplung vorhanden sind, werden Fehlsignale minimiert.

Vorzugsweise ist die Anzeigeeinheit in einem Führerhaus einer Sattelzugmaschine anbringbar. Aufgrund einer derartigen Anordnung der Anzeigeneinheit in dem Führerhaus erhält der Fahrer die Informationen bezüglich der Stellung des Königszapfens zur Sattelkupplung bzw. der Stellung des Bedienhebels in einem von dem Fahrersitz erkennbaren Bereich, so dass der Fahrer beim An-und Abkuppeln das Führerhaus nicht zu verlassen braucht, um sich über die o.g. Informationen Kenntnis zu verschaffen. Darüber hinaus wird die Stellung des Bedienhebels auch während der Fahrt und insbesondere nach längeren Pausen dem Fahrer kontinuierlich angezeigt.

In einer bevorzugten Ausführungsform weist eine Kupplungsplatte zur Aufnahme des Königszapfens eine komplementär ausgebildete Aufnahmeöffnung und der Königszapfen einen oberen Bund, einen durchmesserreduzierten Mittelabschnitt zum Angreifen eines Verschlussriegels und einen unteren Bund auf. Besonders vorteilhaft ist der erste Sensor im Bereich der Aufnahmeöffnung unterhalb der Kupplungsplatte anbringbar und detektiert den Königszapfen. Die wesentlichen Vorteile sind festverlegte Kabel, die keiner permanenten Bewegung unterliegen, eine geringere Stoßbelastung des Sensors sowie ein geringeres Fehlerkennungsrisiko durch eine ortsfeste Montage.

Vorteilhafterweise detektiert der erste Sensor den unteren Bund des Königszapfens. Zunächst einmal unterliegt der untere Bund im Gegensatz beispielsweise zu dem durchmesserreduzierten Mittelabschnitt nur einem geringen Verschleiß, so dass auch nach längerer Betriebszeit ein konstanter Abstand zwischen Sensor und unterem Bund vorliegt Ein weiterer Vorteil, den unteren Bund des Königszapfens zu detektieren, liegt darin, dass der erste Sensor ortsfest in einem geschützten Bereich unterhalb der Kupplungsplatte der Sattelkupplung angeordnet sein kann.

Günstigerweise liegt der erste Sensor dem unteren Bund des eingekuppelten Königszapfens radial gegenüber. Hiermit kann eine Fehlposition oder ein Fehlen des Königszapfens in allen drei Raumrichtungen erkannt werden.

Vorzugsweise ist der erste Sensor in einem dem Verschlussriegel gegenüberliegenden Bereich anbringbar. Im normalen Fahrbetrieb liegt der Königszapfen mit seinem durchmesserreduzierten Mittelabschnitt an dem Verschlussriegel an, so dass nach längerer Zeit ein Verschleiß an beiden Bauteilen auftritt und diese ggfs. gewechselt werden müssen. Der dem Verschlussriegel gegenüberliegende Bereich der Aufnahmeöffnung steht mit dem Königszapfen nur beim Rückwärtsfahren in Kontakt und verschleißt daher sehr wenig. Ein Austausch des Verschlussriegels kann daher wie bisher vorgenommen werden, ohne dass der erste Sensor ausgebaut und nachfolgend aufwendig neu justiert werden muss. Ein weiterer Vorteil liegt darin, dass ein Sensieren des Königszapfens ohne voriges Betätigen des Verschlussriegels vorgenommen werden kann und somit die Sattelkupplung und insbesondere der Verschlussriegel bei einer Fehlstellung des Königszapfens nicht betätigt und dadurch vor Beschädigungen geschont wird.

Vorteilhafterweise kann der erste Sensor einen Näherungsschalter umfassen. Unter Näherungsschalter werden ausschließlich induktiv arbeitende Sensoren verstanden. Derartige Näherungsschalter sind kostengünstig zu beschaffen, technisch ausgereift und können mit gewöhnlichen aus Stahl gefertigten Bauteilen zusammenwirken, so dass ein üblicher Königszapfen verwendet werden kann.

Bei einer anderen günstigen Ausführungsform fixiert ein unterhalb einer Kupplungsplatte angeordneter Verschlussriegel den Königszapfen drehbar, wobei der Verschlussriegel über einen Verschlussmechanismus in eine Öffnungsstellung oder Schließstellung bringbar ist, der Verschlussmechanismus einen Bedienhebel umfasst, der in der Schließstellung in einer Halteposition fixierbar ist, der zweite Sensor an der Unterseite der Kupplungsplatte zum Detektieren der Halteposition des Bedienhebels anbringbar ist und der Bedienhebel einen Schwenkhebel sowie einen daran lateral verschiebbaren, den Bedienhebel sichernden Griffhebel umfasst, wobei der Magnet an dem Griffhebel anbringbar ist.

Im Gegensatz zu den vorstehend genannten Näherungsschaltern werden als magnetempfindliche Sensoren Reed- oder Hall-Sensoren verstanden.

Derartige Sensoren reagieren bei Vorhandensein eines Magnetfeldes und sind daher vergleichsweise unempfindlich gegen benachbarte, ihre Lage verändernde Bauteile aus Stahl.

Eine derartige Ausführungsform gestattet eine einhändige Betätigung der Sattelkupplung und ermöglicht dadurch einen Wechsel zwischen Öffnungs- bzw. Schließstellung. In diesem Fall wird der Schwenkhebel wie bisher mechanisch mit einer z. B. zackenförmigen Ausnehmung, die eine Wandung oder einen Nocken der Sattelkupplung hintergreift, gesichert. Um den Schwenkhebel nunmehr ausschwenken zu können und dadurch die zackenförmige Ausnehmung von der Wandung zu lösen, muss der Griffhebel gegenüber dem Schwenkhebel lateral verschoben werden, wodurch ein an dem Griffhebel angeordneter Magnet seine Position zu dem zweiten Sensor verändert und dadurch Einfluss auf den magnetempfindlichen Sensor nimmt.

Vorzugsweise ist der Magnet an dem kupplungsseitigen Ende des Bedienhebels anbringbar, besonders bevorzugt an dem kupplungsseitigen Ende des Griffhebels. Diese Anordnung gestattet es, den zweiten Sensor an einem geschützten Ort innerhalb der Sattelkupplung unterzubringen. Das Anbringen des Sensors an der vorstehend beschriebenen Ausführungsform für eine einhändige Betätigung der Sattelkupplung hat darüber hinaus den Vorteil, dass der zweite Sensor gleichzeitig die Hebelmechanik und damit auch den Schwenkhebel detektiert, so dass ein Defekt im Bereich des Schwenkhebels ebenfalls erkannt wird.

Günstigerweise ist der zweite Sensor ortsfest zu der Kupplungsplatte anbringbar. Hierdurch unterliegt der Sensor selbst, die Anschlusskabel und Lötstellen einer geringeren mechanischen Belastung.

Desweiteren stellt die Erfindung eine Sattelkupplung gemäβ den Merkmalen des Anspruchs 3 oder 7 bereit.

Anhand der nachfolgenden zwei Zeichnungsfiguren wird die Erfindung beispielhaft näher erläutert. Dabei zeigen die
- Figur 1: einen Längsschnitt durch eine Sattelkupplung mit Königszapfen und erstem Sensor: und die
- Figur 2: eine Unteransicht einer Sattelkupplung mit erstem und zweitem Sensor.

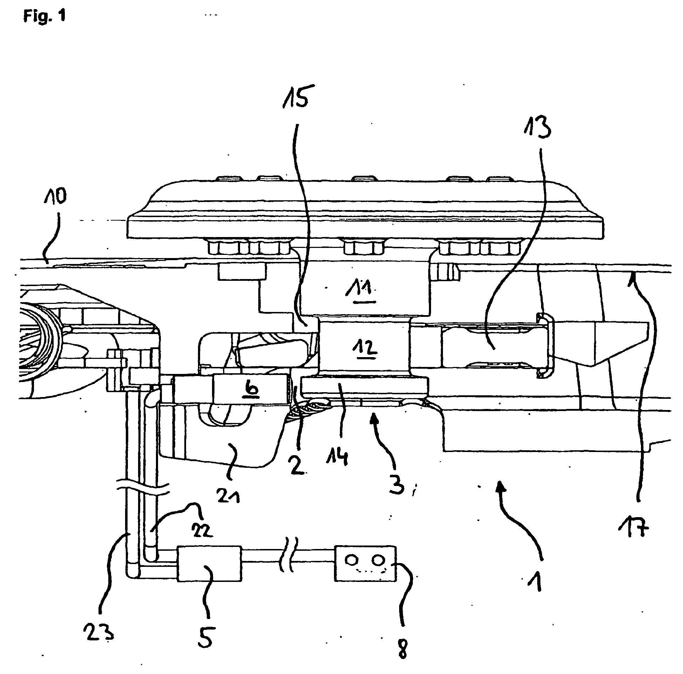

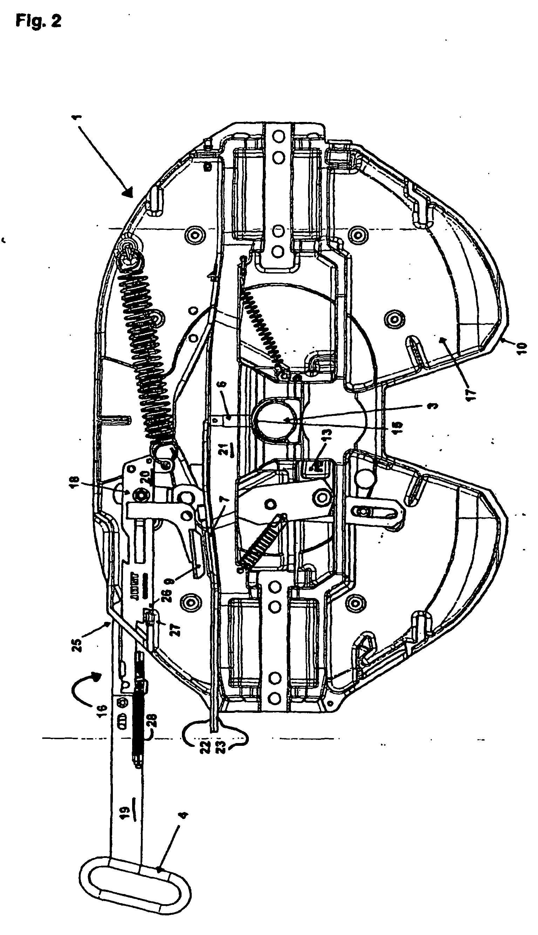

In der Figur 1 ist ein Längsschnitt durch den mittleren Bereich einer Sattelkupplung 1 mit einem in einer Aufnahmeöffnung 2 (vergleiche Figur 2) angeordneten Königszapfen 3 dargestellt. Der Königszapfen 3 weist im wesentlichen einen oberen Bund 11, einen darunterliegenden durchmesserkleineren Mittelabschnitt 12 und einen unteren Bund 14 auf. Zur formschlüssigen Verbindung des Königszapfens 3 mit der Sattelkupplung 1 greift ein an der Kupplungsplatte 10 schwenkbar gelagerter Verschlussriegel 13 an den Mittelabschnitt 12 des Königszapfen 3 an.

In radialer Ausrichtung zu dem eingekuppelten Königszapfen 3 befindet sich der in einer Verstärkungsrippe 21 geschützt gelagerte erste Sensor 6, der -berührungslos den unteren Bund 14 des Königszapfen 3 detektiert und ein elektrisches Signal über die erste Sensorleitung 22 an die Auswerteeinheit 5 gibt. Neben der ersten Sensorleitung 22 ist noch die zweite Sensorleitung 23 des zweiten Sensors 7 (siehe Figur 2) an der Auswerteeinheit 5 angeschlossen. Von der Auswerteeinheit 5 verläuft eine Datenleitung 24 beispielsweise in ein Führerhaus einer Zugmaschine (beides nicht eingezeichnet) und ist dort mit einer Anzeigeeinheit 8 verbunden.

Die Figur 2 zeigt in einer Unteransicht die Unterseite 17 der Kupplungsplatte 10 mit daran angreifendem Verschlussmechanismus 16. Der Verschlusshebel 13 befindet sich in einer geschlossenen Stellung, bei Anwesenheit eines Königszapfens 3. An der Aufnahmeöffnung 2, in einem dem Verschlussriegel 13 gegenüberliegenden Bereich 15, ist der erste Sensor 6 in der Verstärkungsrippe 21 untergebracht.

Der Verschlussriegel 13 wird über einen Verschlussmechanismus 16 zwischen einer Öffnungsstellung und der dargestellten Schließstellung bewegt. Ausgelöst wird diese Bewegung über den aus der Sattelkupplung 1 herausragenden Bedienhebel 4, der zweiteilig aufgebaut ist und eine einhändige Betätigung ermöglicht. Im Einzelnen umfasst der Bedienhebel 4 den Schwenkhebel 18 und den daran lateral verschiebbar gelagerten Griffhebel 19. In der dargestellten herausgezogenen Stellung des Griffhebels 19 ist ausreichend Raum in der Hebelöffnung 25 vorhanden, so dass der Schwenkhebel 18 ebenfalls lateral verschoben und durch Einhaken des Vorsprungs 26 hinter dem Nocken 27 fixiert werden kann. Bei einem Loslassen des Griffhebels 19 wird dieser über die Griffhebelspannfeder 28 in Richtung des kupplungsseitigen Endes 20 des Bedienhebels 4 gezogen und füllt die Hebelöffnung 25 nahezu vollständig aus, so dass der Bedienhebel 4 zusätzlich gesichert ist.

Die vorstehend beschriebene Sicherung wird nunmehr durch einen am kupplungsseitigen Ende 20 des Griffhebels 19 angeordneten Magneten 9, der mit einem auf der Unterseite 17 der Kupplungsplatte 10 befestigten zweiten Sensor 7 zusammenwirkt, überwacht. Bei einem Materialbruch an Bauteilen des Bedienhebels 4 oder Nocken 27 könnte es zu einem Herauswandern des Griffhebels 19 und somit vibrationsbedingt zu einem_Öffnen_des_Verschlussriegels 13 kommen. In diesem Fall würde sich bereits bei einem Herauswandem des Griffhebels 19 der Abstand des Magneten 9 zu dem zweiten Sensor 7 vergrößern und dieses dem Fahrer über die Anzeigeeinheit 8 angezeigt werden.

### Bezugszeichenliste

- 1: Sattelkupplung
- 2: Aufnahmeöffnung
- 3: Königszapfen
- 4: Bedienhebel
- 5: Auswerteeinheit
- 6: Erster Sensor
- 7: Zweiter Sensor
- 8: Anzeigeeinheit
- 9: Magnet
- 10: Kupplungsplatte
- 11: Oberer Bund
- 12: Mittelabschnitt
- 13: Verschlussriegel
- 14: Unterer Bund
- 15: dem Verschlussriegel gegenüberliegender Bereich
- 16: Verschtussmechanismus
- 17: Unterseite Kupplungsplatte
- 18: Schwenkhebel
- 19: Griffhebel
- 20: kupplungsseitiges Ende
- 21: Verstärkungsrippe
- 22: Erste Sensorleitung
- 23: Zweite Sensorleitung
- 24: Datenleitung
- 25: Hebelöffnung
- 26: Vorsprung
- 27: Nocken
- **28**: **Griffhebelspannfeder**

## Patentansprüche

1. Vorrichtung zur Anzeige des Verschlusszustandes einer Sattelkupplung (1) umfassend eine Aufnahmeöffnung (2) zur Aufnahme eines Königszapfens (3), einen Bedienhebel (4), der in einer Schließstellung in einer Halteposition fixierbar ist, wobei die Vorrichtung eine Auswerteeinheit (5), an welche ein erster und ein zweiter Sensor (6, 7) angeschlossen sind, sowie eine mit der Auswerteeinheit (5) verbundene Anzeigeeinheit (8) umfasst,
**dadurch gekennzeichnet, dass** der erste Sensor (6) im Bereich der Aufnahmeöffnung (2) anbringbar ist und den Königszapfen (3) detektiert und der zweite Sensor (7) einen magnetempfindlichen Sensor umfasst, der mit einem an den Bedienhebel (4) anbringbaren Magneten (9) zusammenwirkt, wobei beide Sensoren (6, 7) auf unterschiedlichen Messprinzipien beruhen.

2. Vorrichtung nach Anspruch 1, **dadurch gekennzeichnet, dass** die Anzeigeeinheit (8) in einem Führerhaus einer Sattelzugmaschine anbringbar ist.

3. Sattelkupplung mit Kupplungsplatte (10) mit einer Aufnahmeöffnung (2) zur Aufnahme eines einen oberen Bund (11) aufweisenden Königszapfens und mit einer Vorrichtung nach Anspruch 1 oder 2,
**dadurch gekennzeichnet, dass** der erste Sensor (6) den unteren Bund (14) des Königszapfens (3) detektiert.

4. Sattelkupplung nach Anspruch 3, **dadurch gekennzeichnet, dass** der erste Sensor (6) dem unteren Bund (14) des eingekuppelten Königszapfens (3) radial gegenüberliegend anbringbar ist.

5. Sattelkupplung nach Anspruch 3 oder 4, **dadurch gekennzeichnet, dass** der erste Sensor (6) in einem dem Verschlussriegel (13) gegenüberliegenden Bereich (15) anbringbar ist.

6. Sattelkupplung nach einem der Ansprüche 3 bis 5, **dadurch gekennzeichnet, dass** der erste Sensor (6) einen Näherungsschalter umfasst.

7. Sattelkupplung mit Kupplungsplatte (10), bei der unterhalb ein Verschlussriegel (13) angeordnet ist, der einen Königszapfen (3) drehbar fixiert, der Verschlussriegel (13) über einen Verschlussmechanismus (16) in eine Öffnungsstellung oder Schließstellung bringbar ist, und der Verschlussmechanismus (16) einen Bedienhebel (4) umfasst, der in der Schließstellung in einer Halteposition fixierbar ist, und mit einer Vorrichtung nach Anspruch 1 oder 2, wobei der zweite Sensor (7) an der Unterseite (17) der Kupplungsplatte (10) zum Detektieren der Halteposition des Bedienhebels (4) anbringbar ist, und der Bedienhebel (4) einen Schwenkhebel (18) sowie einen daran lateral verschiebbaren, den Bedienhebel (4) sichernden Griffhebel (19) umfasst,
**dadurch gekennzeichnet, dass** der Magnet (9) an dem Griffhebel (19) anbringbar ist.

8. Sattelkupplung nach Anspruch 7, **dadurch gekennzeichnet, dass** der Magnet (9) an dem kupplungsseitigen Ende (20) des Bedienhebels (4) anbringbar ist.

9. Sattelkupplung nach Anspruch 7 oder 8, **dadurch gekennzeichnet, dass** der zweite Sensor (7) ortsfest zu der Kupplungsplatte (10) anbringbar ist.

## Claims

1. Device for indicating the closure state of a fifth wheel coupling (1), comprising a locating opening (2) for locating a king pin (3), an operating lever (4) which, in a closed position, can be fixed in a retaining position, wherein the device comprises an evaluation unit (5) to which a first and a second sensor (6, 7) are connected, and an indicating unit (8) which is connected to the evaluation unit (5),
**characterised in that** the first sensor (6) can be fitted in the region of the locating opening (2) and detects the king pin (3), and the second sensor (7) comprises a magnetically sensitive sensor which co-operates with a magnet (9) which can be fitted to the operating lever (4), wherein the two sensors (6, 7) are based on different measuring principles.

2. Device according to Claim 1, **characterised in that** the indicating unit (8) can be fitted in a driver's cab of a truck tractor.

3. Fifth wheel coupling with coupling plate (10) with a locating opening (2) for locating a king pin having an upper collar (11), and with a device according to Claim 1 or 2,
**characterised in that** the first sensor (6) detects the lower collar (14) of the king pin (3).

4. Fifth wheel coupling according to Claim 3, **characterised in that** the first sensor (6) can be fitted radially opposite the lower collar (14) of the engaged king pin (3).

5. Fifth wheel coupling according to Claim 3 or 4, **characterised in that** the first sensor (6) can be fitted in a region (15) lying opposite the closure bar (13).

6. Fifth wheel coupling according to any one of Claims 3 to 5, **characterised in that** the first sensor (6) comprises a proximity switch.

7. Fifth wheel coupling with coupling plate (10), in which a closure bar (13) is disposed underneath and rotatably fixes a king pin (3), the closure bar (13) can be brought via a closure mechanism (16) into an open or a closed position, and the closure mechanism (16) comprises an operating lever (4) which, in the closed position, can be fixed in a retaining position, and with a device according to Claim 1 or 2, wherein the second sensor (7) can be fitted to the underside (17) of the coupling plate (10) for detecting the retaining position of the operating lever (4), and the operating lever (4) comprises a pivoted lever (18) and a hand lever (19) which can be laterally displaced at the latter and secures the operating lever (4),
**characterised in that** the magnet (9) can be fitted to the hand lever (19).

8. Fifth wheel coupling according to Claim 7, **characterised in that** the magnet (9) can be fitted to the end (20) of the operating lever (4) which is on the coupling side.

9. Fifth wheel coupling according to Claim 7 or 8, **characterised in that** the second sensor (7) can be fitted so as to be stationary relative to the coupling plate (10).

## Revendications

1. Dispositif pour l'affichage de la position de fermeture d'une sellette d'attelage (1), comprenant une ouverture de réception (2) pour la réception d'un pivot central (3), un levier de manoeuvre (4) qui peut être immobilisé en position de fermeture dans une position de retenue, dans lequel le dispositif comprend une unité d'évaluation (5), à laquelle sont connectés un premier et un deuxième capteurs (6, 7), ainsi qu'une unité d'affichage (8) reliée à l'unité d'évaluation (5), **caractérisé en ce que** le premier capteur (6) peut être disposé dans la zone de l'ouverture de réception (2) et détecte le pivot central (3), et le deuxième capteur (7) comprend un capteur magnétosensible qui agit conjointement avec un aimant (9) pouvant être disposé sur le levier de manoeuvre (4), les deux capteurs (6, 7) reposant sur des principes de mesure différents.

2. Dispositif selon la revendication 1, **caractérisé en ce que** l'unité d'affichage (8) peut être disposée dans une cabine de conducteur d'un tracteur de semi-remorque.

3. Sellette d'attelage comprenant une plaque d'attelage (10) ayant une ouverture de réception (2) pour la réception d'un pivot central présentant un collet supérieur (11), et comprenant un dispositif selon la revendication 1 ou 2, **caractérisée en ce que** le premier capteur (6) détecte le collet inférieur (14) du pivot central (3).

4. Sellette d'attelage selon la revendication 3, **caractérisée en ce que** le premier capteur (6) peut être disposé à un endroit radialement opposé au collet inférieur (14) du pivot central (3) en position attelée.

5. Sellette d'attelage selon la revendication 3 ou 4, **caractérisée en ce que** le premier capteur (6) peut être disposé dans une zone (15) opposée au verrou de fermeture (13).

6. Sellette d'attelage selon l'une quelconque des revendications 3 à 5, **caractérisée en ce que** le premier capteur (6) comprend un détecteur de proximité.

7. Sellette d'attelage comprenant une plaque d'attelage (10), sur le dessous de laquelle se trouve un verrou de fermeture (13) qui immobilise un pivot central (3) en le laissant tourner, dans laquelle le verrou de fermeture (13) peut être mis dans une position d'ouverture ou dans une position de fermeture par l'intermédiaire d'un mécanisme de fermeture (16), et dans laquelle le mécanisme de fermeture (16) comprend un levier de manoeuvre (4) qui peut être immobilisé en position de fermeture dans une position de retenue, et comprenant un dispositif selon la revendication 1 ou 2, dans lequel le deuxième capteur (7) peut être disposé sur la face inférieure (17) de la plaque d'attelage (10) pour détecter la position de retenue du levier de manoeuvre (4), et dans laquelle le levier de manoeuvre (4) comprend un levier pivotant (18) ainsi qu'un levier de préhension (19) pouvant coulisser latéralement sur celui-ci et bloquant le levier de manoeuvre (4), **caractérisée en ce que** l'aimant (9) peut être disposé sur le levier de préhension (19).

8. Sellette d'attelage selon la revendication 7, **caractérisée en ce que** l'aimant (9) peut être disposé sur l'extrémité (20) côté attelage du levier de manoeuvre (4).

9. Sellette d'attelage selon la revendication 7 ou 8, **caractérisée en ce que** le deuxième capteur (7) peut être disposé de manière fixe par rapport à la plaque d'attelage (10).
